# EUROPEAN PATENT APPLICATION

(11) **EP 4 779 606 A1**
(43) Date of publication of application: **22.07.2026**
(21) Application number: 25153123.2
(22) Date of filing: 21.01.2025
(51) Int. Cl.: G08B 21/02

(54) **HAZARD ALERT AND VISUALIZED AUDIT SYSTEM AND METHOD**

(71) Applicant: Politecnico di Milano, 20133 Milano (IT)
(72) Inventor: Urgo, Marcello, 20127 Milano (IT); Berardinucci, Francesco, 66023 Chieti (IT); Rossoni, Marco, 20159 Milano (IT); Colombo, Giorgio, 24030 Pontida (IT)
(74) Representative: Bringer IP

(57) **Abstract**

Industrial hazard alert and visualized audit includes the receipt of sensor data from different sensors positioned in a geographic zone of interest at an industrial site, the computation of a position of one or more objects in the geographic zone of interest and the determination whether or not a hazardous condition has arisen based upon a proximity of a worker and the computed position. In response to the hazardous condition, an alert is generated in connection with the worker, an identity of the hazardous condition is stored along with the sensor data and the computed position within an audit record in an audit data store. Further, a graphical visualization is generated of the hazardous condition from the computed position and at least a portion of the sensor data. Finally, the graphical visualization is stored in the audit record for retrieval in visualizing the hazardous condition.

## Description

### BACKGROUND OF THE INVENTION

### Field of the Invention

The present invention relates to the technical field of factory safety and more particularly to recognizing and recording audit information, hazardous conditions arising on a factory floor.

### Description of the Related Art

Factory safety is of utmost importance, and the failure to effectively detect hazardous zones on the factory floor can be a matter of life or death. Ensuring that all potential hazards are identified and managed can be crucial for maintaining a safe working environment. The traditional approach to determining hazardous zones in factories has relied heavily on manual assessments and physical barriers. Safety officers and inspectors would walk through the factory floor, visually inspecting and identifying potential hazards. While this method can be effective to some extent, it is also prone to errors and inconsistencies. Human judgment can vary, and the dynamic nature of factory environments means that hazards can change rapidly. As a result, manual assessments may not always capture the full scope of potential risks. The subjective nature of human assessments can lead to overlooked hazards, which can compromise the safety of workers.

Conventional technological approaches to hazard detection supplement manual approaches and involve computer-processed object detection and the resulting alerting of a dangerous condition in association with the detection of the object. Such alerts generally involve audio or visual alerts such as a strobing light or audible alarm. The object detection usually is performed with the assistance of proximity detection mechanisms like radio frequency identification (RFID) tag detection. The use of technology in this manner ensures that hazards are continuously monitored and updated in real-time.

Despite advancements in hazardous condition detection, the complex and ever-changing nature of the factory floor necessitates a more robust and thorough solution. To wit, typically on the modern factory floor, machinery, raw materials, and finished products are constantly moved and rearranged. In some instances, the presence of heavy machinery at a location proximate to a worker presents a hazard should the heavy machinery fall onto or collide with the worker. Likewise, while some objects on the factory floor alone are inert and present no danger, when in proximity to other objects, the combination can present a hazardous risk.

This dynamic environment thus requires continuous monitoring and re-evaluation of hazardous zones. As factory operations evolve, new hazards can emerge, and existing hazards can become more or less severe. Therefore, an ongoing assessment process include retroreflective analysis of already occurred hazardous conditions is critical for ensuring the safety of all personnel on the factory floor.

### BRIEF SUMMARY OF THE INVENTION

Embodiments of the present invention address technical deficiencies of the art in respect to industrial hazard alert processing. To that end, embodiments of the present invention provide for a novel and non-obvious method for industrial hazard alert and visualized audit. Embodiments of the present invention also provide for a novel and non-obvious computing device adapted to perform the foregoing method. Finally, embodiments of the present invention provide for a novel and non-obvious data processing system incorporating the foregoing device in order to perform the foregoing method.

In one embodiment of the invention, an industrial hazard alert and visualized audit method includes receiving sensor data from different sensors positioned in a geographic zone of interest at an industrial site, computing a position of one or more objects in the geographic zone of interest and determining if a hazardous condition has arisen based upon a proximity of a worker and the computed position. In response to the hazardous condition, the method generates an alert in connection with the worker, stores an identity of the hazardous condition, the sensor data and the computed position in an audit record in an audit data store, generates a graphical visualization of the hazardous condition from the computed position and at least a portion of the sensor data and stores the graphical visualization in the audit record for retrieval in visualizing the hazardous condition.

In different aspects of the embodiment, the graphic visualization is a virtual reality rendering of the one or more objects at the computed position in the geographic zone of interest and the worker. In different aspects of the embodiment, the proximity is determined as a function of a type of the objects for which the position had been computed, or as a function of a position of the worker in two-dimensional space and a position of the one or more objects in three-dimensional space. In different aspects of the embodiment, the alert is a message to a cellular telephone coupled to a 5G telecommunications network over which the sensor data is received.

Of note, in yet a further aspect of the embodiment, the hazardous condition is determined responsive to a prediction by a neural network trained to correlate the position of the worker and the sensor data with a probability of the hazardous condition. In yet another aspect of the embodiment, a digital twin models different positions of different ones of the objects in the geographic zone of interest relative to a location of the worker and predicts the hazardous condition in a simulation of the digital twin responsive to the sensor data and the proximity of the worker.

In another embodiment of the invention, a data processing system is adapted for industrial hazard alert and visualized audit. The system includes a host computing platform of one or more computers, each with memory and one or processing units including one or more processing cores. The system further includes different sensors positioned in a geographic zone of interest at an industrial site. The system yet further includes an industrial hazard alert module. The module includes computer program instructions which are enabled while executing in the memory of at least one of the processing units of the host computing platform to perform a process for industrial hazard alert and visualized audit.

Specifically, program instructions during execution receive sensor data from the different sensors, compute a position of one or more objects in the geographic zone of interest and determine if a hazardous condition has arisen based upon a proximity of a worker and the computed position. The program instructions respond to the hazardous condition by generating an alert in connection with the worker, storing an identity of the hazardous condition, the sensor data and the computed position in an audit record in an audit data store, generating a graphical visualization of the hazardous condition from the computed position and at least a portion of the sensor data and storing the graphical visualization in the audit record for retrieval in visualizing the hazardous condition.

Optionally, the system additionally includes a neural network accessible by the host computing platform, the neural network having been trained to correlate the position of the worker and the sensor data with a probability of the hazardous condition. As such, the program instructions during execution determine that the hazardous condition has arisen in response to a prediction by the neural network.

As another option, the system additionally includes a digital twin executing in the memory of the host computing platform. The digital twin models different positions of different ones of the objects in the geographic zone of interest relative to a location of the worker and predicts the hazardous condition in a simulation of the digital twin responsive to the sensor data and the proximity of the worker.

In this way, the technical deficiencies of the hazardous condition planning are overcome owing to the generation of a visualization of a hazardous condition subsequent to detecting the hazardous condition and the storage of the visualization for use in a later audit of the hazardous condition so that future planning can occur in reference to the past occurred hazardous condition.

Additional aspects of the invention will be set forth in part in the description which follows, and in part will be obvious from the description, or may be learned by practice of the invention. The aspects of the invention will be realized and attained by means of the elements and combinations particularly pointed out in the appended claims. It is to be understood that both the foregoing general description and the following detailed description are exemplary and explanatory only and are not restrictive of the invention, as claimed.

### BRIEF DESCRIPTION OF THE SEVERAL VIEWS OF THE DRAWINGS

The accompanying drawings, which are incorporated in and constitute part of this specification, illustrate embodiments of the invention and together with the description, serve to explain the principles of the invention. The embodiments illustrated herein are presently preferred, it being understood, however, that the invention is not limited to the precise arrangements and instrumentalities shown, wherein:
Figure 1 is a pictorial illustration reflecting different aspects of a process of industrial hazard alert and visualized audit;
Figure 2 is a block diagram depicting a data processing system adapted to perform one of the aspects of the process of Figure 1; and,
Figure 3 is a flow chart illustrating one of the aspects of the process illustrated in Figure 1.

### DETAILED DESCRIPTION OF THE INVENTION

Embodiments of the invention provide for industrial hazard alert and visualized audit. In accordance with an embodiment of the invention, object positioning within a factory floor space can be monitored with sensors as can a positioning of a worker on the factory floor space. A hazardous condition can be detected based upon a comparison of the positioning of the objects on the factory floor space and a position of the worker resulting in an alert issued to a mobile device associated with the worker. As well, data collected in the course of detecting the hazardous condition can be stored in an audit store for subsequent review. Importantly, a visualization of the hazardous condition can be generated from the collected data and also stored within the audit store so that during the subsequent review, the visual appearance of the hazardous condition can be visually recognized.

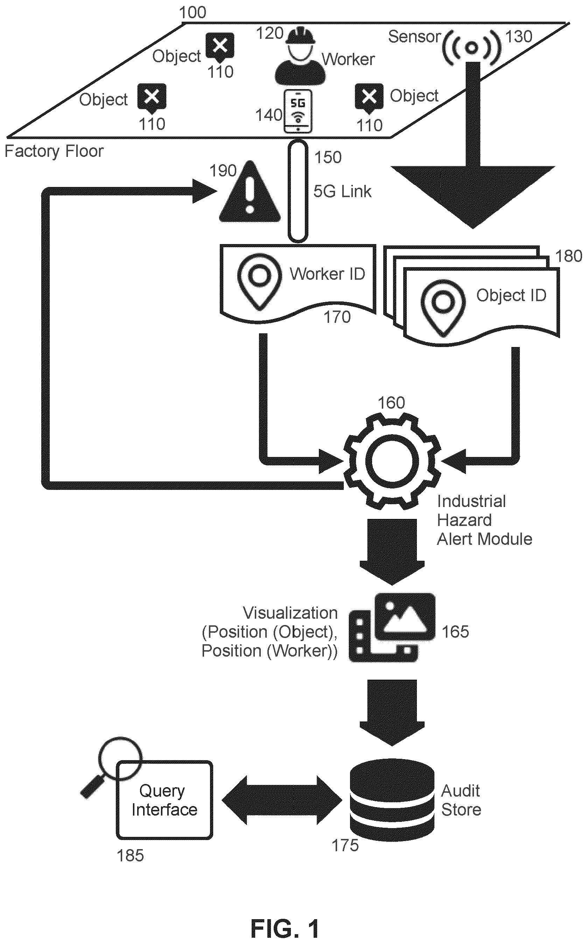

In illustration of one aspect of the embodiment, Figure 1 pictorially shows a process of industrial hazard alert and visualized audit. As shown in Figure 1, objects 110 positioned on the factory floor 100 are monitored with one or more sensors 130 in order to detect the individual position of each of the objects, a proximity of two or more of the objects 110 to one another, or a recognized arrangement of the objects 110 on the factory floor 100. As well, a position of a factory worker 120, for instance by locating a position of an associated mobile device 140 is determined. Data 180 associated with the objects 110 are provided over wireless computer communications network to an industrial hazard alert module 160 along with the positioning information 170 of the worker 120, for example through a separate 5G network communications link 150 between the mobile phone 140 and the industrial hazard alert module 160.

The industrial hazard alert module 160 recognizes a hazardous condition on the factory floor 100 by comparing the locations of the individual ones of the objects 110 relative to a position of the worker 120, and also relative to one another. In this regard, the industrial hazard alert module 160 can match the relative distances of each of the objects 110 to one another to a table of known hazardous conditions, or the industrial hazard alert module 160 can match the distance of one or more of the objects 110 to the location of the worker 120, or the industrial hazard alert module 160 can compare imagery of the arrangement of objects 110 and the location of the worker 120 to imagery of known hazardous conditions, or the industrial hazard alert module 160 can submit the data 180 and the positioning information 170 of the worker to a predictor or a simulator of a digital twin of the factory floor 100 in order to predict a hazardous condition.

Upon recognizing the hazardous condition, the industrial hazard alert module 160 transmits an alert message 190 over the 5G network communications link 150 to the mobile phone 140 of the worker. As well, the industrial hazard alert module 160 generates a visualization 165 of the hazardous condition by generating components of the imagery in correspondence to positioning of the objects 110 evident from the data 180, and the position of the worker 120 evident from the positioning information 170. Finally, the industrial hazard alert module 160 stores the visualization 165 in an audit store 175 along with the data 180 and the positioning information 170 and provides a query interface 185 to the audit store 175 so that the nature of the hazardous condition can be subsequently analyzed offline.

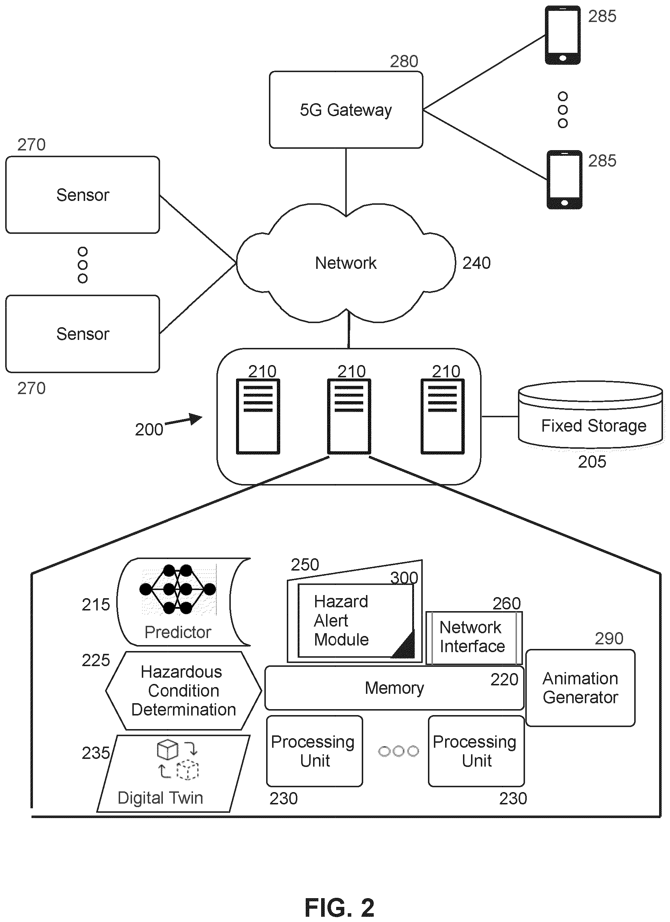

Aspects of the process described in connection with Figure 1 can be implemented within a data processing system. In further illustration, Figure 2 schematically shows a data processing system adapted to perform industrial hazard alert and visualized audit. In the data processing system illustrated in Figure 1, a host computing platform 200 is provided. The host computing platform 200 includes one or more computers 210, each with memory 220 and one or more processing units 230. The computers 210 of the host computing platform (only a single computer shown for the purpose of illustrative simplicity) can be co-located within one another and in communication with one another over a local area network, or over a data communications bus, or the computers can be remotely disposed from one another and in communication with one another through network interface 260 over a data communications network 240.

The host computing platform 200 is communicatively coupled over data communications network 240 to a multiplicity of different sensors 270 disposed about a factory floor. The sensors 270, for example cameras or cellular signal receivers, are adapted to recognize positioning of one or more objects on the factory floor, in the case of cameras, by the correlation of captured imagery with a known position on the factory floor, or in the case of cellular signal receivers, by extracting positional coordinates from cellular transmitters affixed to the objects. To that end, the sensors 270 can be in individual communication with communications elements disposed on each of the objects over a short range wireless communications link such as Bluetooth, or the sensors 270 can be one or more cameras capturing imagery of one or more of the objects in order to deduce relative positioning of one or more of the objects with respect to others of the objects. Finally, the host computing platform 200 is communicatively coupled over data communications network 240 to a 5G gateway providing cellular data connectivity to one or more different mobile devices 285 present on the factory floor in association with different workers.

Notably, a computing device 250 including a non-transitory computer readable storage medium can be included with the data processing system 200 and accessed by the processing units 230 of one or more of the computers 210. The computing device stores 250 thereon or retains therein a program module 300 that includes computer program instructions which when executed by one or more of the processing units 230, performs a programmatically executable process for industrial hazard alert and visualized audit. Specifically, the program instructions during execution receive through the network interface 260 positioning data of one or more different workers on the factory floor through the 5G gateway 280, and positioning data for one or more objects on the factory floor determined by the sensors 270.

The program instructions access hazardous condition determination code 225 with the positioning data in order to determine whether or not a hazardous condition has arisen. In this regard, the hazardous condition determination code 225 is program code executing in the memory 220 by the processing units 230 and matching the positioning data to that of known hazardous conditions. In a most simple form, the hazardous condition determination code 225 accesses a table of records, each of the records having an association between a known hazardous condition and the relative positioning of one or more of the objects and the position of a worker. In a more complex aspect of the embodiment, however, the hazardous condition determination code 225 accesses one or both of a predictor 215 in the form of a convolutional neural network trained to associate positioning data with hazardous conditions, and a digital twin simulating hazardous conditions on the factory floor.

In any event, the program instructions respond to the hazardous condition determination code 225 indicating the presence of a hazardous condition by transmitting an alert through the 5G gateway 280 to an associated one of the mobile devices 285 associated with a worker implicated by the hazardous condition. As well, the program instructions direct animation generator code 290 to generate an animation of the factory floor with the positioning data so as to provide a visualization of the hazardous condition. In this regard, the animation generator code 290 receives the dimensions of the factory floor and the positioning data over time of the objects and the worker or workers before and during the hazardous condition on the factory floor and creates a two-dimensional or three-dimensional sequence of representative images as an animation of the hazardous condition as the hazardous condition evolves. Finally, the program code stores the visualization and the positioning data in fixed storage 205 for subsequent review and analysis.

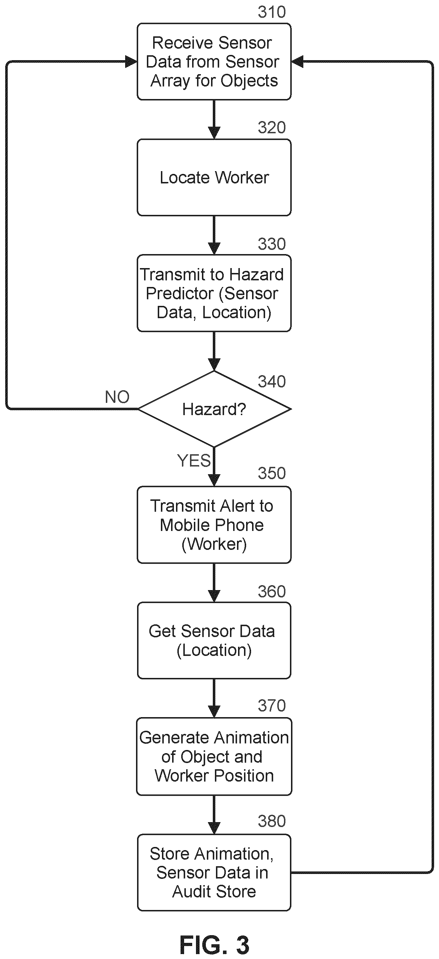

In further illustration of an exemplary operation of the module, Figure 3 is a flow chart illustrating one of the aspects of the process of Figure 1. Beginning in block 310, sensor data is received from different objects on a factory floor. In block 320, a worker is position located on the factory floor. In block 300, the sensor data and worker position are provided to a predictor trained to predict a hazardous condition and in decision block 340, on condition the predictor predicts a hazardous condition, in block 350, an alert is transmitted to the mobile device of the worker. Then, in block 360, the sensor data is retrieved for the hazardous condition in connection with the worker and provided in block 370 to an animation generator to generate an animation of the hazardous condition before and during the hazardous condition. Finally, in block 380 the animation and the sensor data are stored in an audit store in connection with the hazardous condition.

Of import, the foregoing flowchart and block diagram referred to herein illustrate the architecture, functionality, and operation of possible implementations of systems, methods, and computing devices according to various embodiments of the present invention. In this regard, each block in the flowchart or block diagrams may represent a module, segment, or portion of instructions, which includes one or more executable instructions for implementing the specified logical function or functions. In some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions.

More specifically, the present invention may be embodied as a programmatically executable process. As well, the present invention may be embodied within a computing device upon which programmatic instructions are stored and from which the programmatic instructions are enabled to be loaded into memory of a data processing system and executed therefrom in order to perform the foregoing programmatically executable process. Even further, the present invention may be embodied within a data processing system adapted to load the programmatic instructions from a computing device and to then execute the programmatic instructions in order to perform the foregoing programmatically executable process.

To that end, the computing device is a non-transitory computer readable storage medium or media retaining therein or storing thereon computer readable program instructions. These instructions, when executed from memory by one or more processing units of a data processing system, cause the processing units to perform different programmatic processes exemplary of different aspects of the programmatically executable process. In this regard, the processing units each include an instruction execution device such as a central processing unit or "CPU" of a computer. One or more computers may be included within the data processing system. Of note, while the CPU can be a single core CPU, it will be understood that multiple CPU cores can operate within the CPU and in either instance, the instructions are directly loaded from memory into one or more of the cores of one or more of the CPUs for execution.

Aside from the direct loading of the instructions from memory for execution by one or more cores of a CPU or multiple CPUs, the computer readable program instructions described herein alternatively can be retrieved from over a computer communications network into the memory of a computer of the data processing system for execution therein. As well, only a portion of the program instructions may be retrieved into the memory from over the computer communications network, while other portions may be loaded from persistent storage of the computer. Even further, only a portion of the program instructions may execute by one or more processing cores of one or more CPUs of one of the computers of the data processing system, while other portions may cooperatively execute within a different computer of the data processing system that is either co-located with the computer or positioned remotely from the computer over the computer communications network with results of the computing by both computers shared therebetween.

The corresponding structures, materials, acts, and equivalents of all means or step plus function elements in the claims below are intended to include any structure, material, or act for performing the function in combination with other claimed elements as specifically claimed. The description of the present invention has been presented for purposes of illustration and description but is not intended to be exhaustive or limited to the invention in the form disclosed. Many modifications and variations will be apparent to those of ordinary skill in the art without departing from the scope and spirit of the invention. The embodiment was chosen and described in order to best explain the principles of the invention and the practical application, and to enable others of ordinary skill in the art to understand the invention for various embodiments with various modifications as are suited to the particular use contemplated.

Having thus described the invention of the present application in detail and by reference to embodiments thereof, it will be apparent that modifications and variations are possible without departing from the scope of the invention defined in the appended claims as follows:

## Claims

1. An industrial hazard alert and visualized audit method comprising:
receiving sensor data from different sensors positioned in a geographic zone of interest at an industrial site;
computing a position of one or more objects in the geographic zone of interest;
determining if a hazardous condition has arisen based upon a proximity of a worker and the computed position; and,
responding to the hazardous condition by:
generating an alert in connection with the worker,
storing an identity of the hazardous condition, the sensor data and the computed position in an audit record in an audit data store,
generating a graphical visualization of the hazardous condition from the computed position and at least a portion of the sensor data; and
storing the graphical visualization in the audit record for retrieval in visualizing the hazardous condition.

2. The method of claim 1, wherein the graphic visualization is a virtual reality rendering of the one or more objects at the computed position in the geographic zone of interest and the worker.

3. The method of claim 1, wherein the proximity is determined as a function of a type of the objects for which the position had been computed.

4. The method of claim 1, wherein the proximity is determined as a function of a position of the worker in two-dimensional space and a position of the one or more objects in three-dimensional space.

5. The method of claim 1, wherein the alert is a message to a cellular telephone coupled to a 5G telecommunications network over which the sensor data is received.

6. The method of claim 1, wherein the alert is a message to a tablet computer.

7. The method of claim 1, wherein the message is an audio message.

8. The method of claim 1, wherein the hazardous condition is determined responsive to a prediction by a neural network trained to correlate the position of the worker and the sensor data with a probability of the hazardous condition.

9. The method of claim 1, wherein a digital twin models different positions of different ones of the objects in the geographic zone of interest relative to a location of the worker and predicts the hazardous condition in a simulation of the digital twin responsive to the sensor data and the proximity of the worker.

10. A data processing system adapted for industrial hazard alert and visualized audit, the system comprising:
a host computing platform comprising one or more computers, each with memory and one or processing units including one or more processing cores;
multiple different sensors positioned in a geographic zone of interest at an industrial site; and,
an industrial hazard alert module comprising computer program instructions enabled while executing in the memory of at least one of the processing units of the host computing platform to perform:
receiving sensor data from the sensors;
computing a position of one or more objects in the geographic zone of interest;
determining if a hazardous condition has arisen based upon a proximity of a worker and the computed position; and,
responding to the hazardous condition by:
generating an alert in connection with the worker,
storing an identity of the hazardous condition, the sensor data and the computed position in an audit record in an audit data store,
generating a graphical visualization of the hazardous condition from the computed position and at least a portion of the sensor data; and
storing the graphical visualization in the audit record for retrieval in visualizing the hazardous condition.

11. The system of claim 10, wherein the hazardous condition is determined responsive to a prediction by a neural network trained to correlate the position of the worker and the sensor data with a probability of the hazardous condition.

12. The system of claim 10, wherein a digital twin models different positions of different ones of the objects in the geographic zone of interest relative to a location of the worker and predicts the hazardous condition in a simulation of the digital twin responsive to the sensor data and the proximity of the worker.
